# EUROPEAN PATENT APPLICATION

(11) **EP 2 731 011 A1**
(43) Date of publication of application: **14.05.2014**
(21) Application number: 13189099.8
(22) Date of filing: 17.10.2013
(51) Int. Cl.: G06F 9/48

(54) **Shared instant media access for mobile devices**

(30) Priority: 09.11.2012 US 201213673519
(71) Applicant: SAP AG, 69190 Walldorf (DE)
(72) Inventor: Eichberger, Gert, 69190 Walldorf (DE)
(74) Representative: Richardt Patentanwälte PartG mbB

(57) **Abstract**

In response to an identification of a displayed position in a file, a shortcut to the identified position in the file may be created on a desktop environment. In response to an activation of the shortcut, the identified position in the file may be indicated. In response to the activation, the file may be opened. Identification of the position in the file may include dragging a cursor from the position in the file to a location on the desktop environment. Identification of the position in the file may include dragging a cursor from the position in the file to a toolbar and dragging the cursor from the toolbar to a location on the desktop environment.

## Description

The present invention relates to a system for providing and sharing instant access to earlier visual situations when displaying or rendering files and media items. In particular, the present invention relates to architecture of mobile and stationary computer device infrastructure equipped to provide and share instant access to earlier visual situations when displaying or rendering files and media items and to methods for operating such computer device infrastructure.

Users often access files on a computer device multiple times. For example, the user of a mobile computer device (short: mobile device) as, for example, a smart phone, a tablet pc or a similar small-size display equipped mobile device, may wish to access a position at the end of an e-mail message at a later time to look for the phone number in the e-mail signature before making a phone call. As another example the user may wish to access a movie at a certain intermediate position within the timeframe of the movie when the movie data is hosted on a remote location as a cloud or another kind of file hosting site. In another exemplary situation the user of a smartphone wants to share a zoomed and/or rotated view to a detail on a presentation slide with another person.

As another principal example, a user may draft a paper using a word processing application over a prolonged period. In the process of drafting the paper, the user may plan on adding more content to various paragraphs as the drafting progresses, and therefore, the user may need fast access to different portions of the paper at particular points in time. In general, there is a need for a user of a mobile or desktop device to recover to an earlier visual situation when accessing, displaying or manipulating with files or any kind of media in the meaning of a more general concept of digital data.

Similarly, a user may access multiple files in order to combine content from those files. For example, a user may access a word processing file, a spreadsheet, and a presentation to combine content from all three files. Specifically, the user may need to access particular portions of each file which may contain related content. However, especially actual mobile devices do not provide functionality to share instant access to a particular location in an e-mail, short message, multimedia message or any type of file stored in local or remote memory. The same applies in general to current desktop environments which don't have mechanisms allowing a user to easily access a particular portion within a file efficiently.
Fig. 1 illustrates the creation of a shortcut to a position in a file according to an embodiment in connection with a mobile device.
Fig. 2 illustrates the creation of a shortcut to a position in a file according to an embodiment in connection with a desktop device.
Fig. 3 illustrates the creation of a shortcut to a position in a video file according to an embodiment.
Fig. 4 illustrates the presentation of application windows based on the arrangement of shortcuts according to an embodiment.
Fig. 5 illustrates a first exemplary architecture in an embodiment of the invention; and
Fig. 6 illustrates a second exemplary architecture in an embodiment of the invention.

Embodiments may be discussed in systems to efficiently access portions of files. In an embodiment, in response to an identification of a displayed position in a file, a shortcut to the identified position in the file may be created on a desktop environment. In response to an activation of the shortcut, the identified position in the file may be indicated. In an embodiment, in response to the activation, the file may be opened. In an embodiment, identification of the position in the file may include dragging a cursor from the position in the file to a location on the desktop environment. In an embodiment, identification of the position in the file may include dragging a cursor from the position in the file to a toolbar and dragging the cursor from the toolbar to a location on the desktop environment.

In an embodiment, in response to a selection and activation of shortcuts, an arrangement of application windows associated with the shortcuts may be determined. The determined arrangement may mirror an arrangement of the shortcuts. The application windows may be displayed on the desktop environment based on the determined arrangement. In an embodiment, the determined arrangement may utilize a maximum available display space on the desktop environment.

A 'mobile device' as used herein shall mean any kind of portable computing device equipped for wired or wireless access to a computer network. In particular, a 'mobile device' may be a smart phone, a tablet device or a similar small-size display equipped mobile device.

A 'desktop' as used herein shall, in an apparatus, relate to functionality for presenting a visual and interactive appearance of a virtual desktop to a user via a graphical user interface as known from commonly used computer systems equipped with typical desktop operating systems, e.g. Microsoft Windows® , Mac ™ OS, OS/2. In a method, a 'desktop' shall relate to a number of steps in a computer system inner state transition suitable for making a visual representation interactive and behaving like a virtual desktop.

A 'surface' as used herein shall, in an apparatus, relate to functionality for presenting a visual and interactive appearance of an active and responsive surface to a user via a graphical and tactile user interface as known from commonly used mobile devices equipped with typical mobile operating systems, e.g. Android, Windows Mobile/Phone, Apple iOS, Blackberry OS, PalmOS. In a method, a 'desktop' shall relate to a number of steps in a computer system inner state transition suitable for making a visual representation interactive and behaving like an active and responsive surface.

A 'file' as used herein shall relate to persistent data in linear organization or to any kind of data access means providing data behaving like linear organized persistent data. The term 'media item' as used herein shall relate to more general concepts of data than 'files'. Therefore, 'media item' shall include but not be limited to any kind of files, stream based data and means or methods for accessing data on e-mail server systems or in relational databases. In connection with a desktop or a surface the term 'file' shall relate to a means or method for providing a visual representation of linear persistent data susceptible to user manipulation. A 'shared' file or media item as used herein shall relate to a file or media item which is accessible by multiple devices. A shared file or media item does not need to be susceptible to manipulation through any of the devices accessing the file or media item. The shared file or media item may be of the read-only type versus all accessing devices, as, for example, an internet radio/television stream. In another embodiment, the shared file or media item may be provided in a manner allowing manipulation by one or several accessing devices. In particular circumstances, a shared file or media item may be understood as a file or media item having the underlying data stored on a central remote storage or site as, for example, a cloud.

A 'shortcut' as used herein shall relate to a special kind of a file in connection with a desktop or surface environment which is suitable for encoding a reference to another file or media item.

A 'cloud' as used herein shall relate to means and methods for remote data access in computer networks according to the *NIST Definition of Cloud Computing.*

The process of 'displaying' as used herein shall have the meaning of creating a visual appearance on a surface or desktop. The term 'rendering' shall have the more general meaning of any type of playback, whether visual, acoustical or tactile. Displaying and rendering are typical operations on files and media items to provide the user with a suitable and comprehensive representation of the contents of the file or media item.

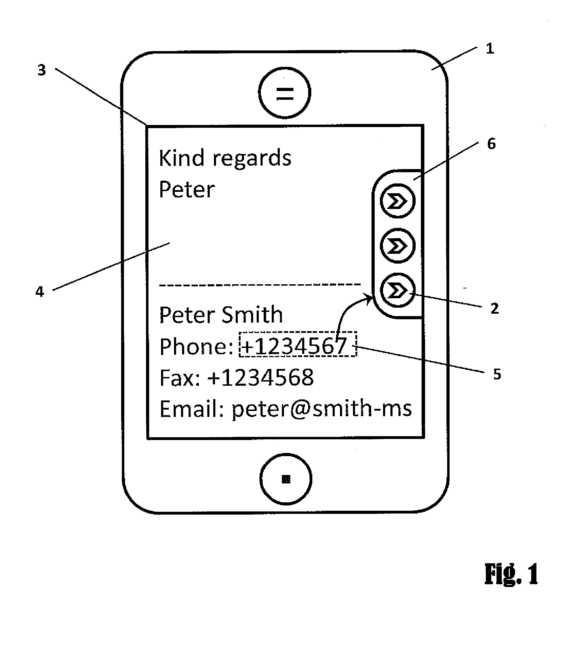

Fig. 1 illustrates the creation of a shortcut to a position in a file according to a first embodiment for a mobile device, namely a smartphone 1. In the embodiment the shortcut 2 may be created via interactions with the surface 3 of the smartphone 1. The surface 3 may be of the conventional touch screen type. Additionally, a loudspeaker and/or microphone may be comprised in the surface 3 to enable playback and/or recording of audio media items or acoustic signal feedback and/or input. A user may interact with a number of applications running on the embedded computing device of the smartphone 1 by means of the surface 3 for accessing and manipulating a wide variety of files and media items, for example, e-mails, short messages, multimedia messages, webpages and files, regardless whether stored in the internal storage of the smartphone 1 or at a remote locations as, for example, a cloud or another type file hosting site. User access to a file or media item or user manipulation of a file or media item may result in an application's behavior which is typical or comprised in a set of typical behaviors for the type of the respective media item. Such behavior could be to show, save, delete, forward or reply an e-mail, short/multimedia message, or to open, view, edit, save, and/or closing the contents of a text file. In an exemplary embodiment, a user may access an e-mail 4 to display the message text contained therein. Then, the user may create a shortcut 2 on the surface 3 to a particular position 5 in the e-mail message 4. When the shortcut 2 is created it may be associated with the position 5 in the e-mail message 4. This association may be persistent even after displaying of the e-mail message 4 has been altered or terminated or even the underlying application has been stopped. Various actions may be used to create the shortcut 2. In an embodiment, the user may initialize the process for creation of the shortcut 2 by a simple tactile gesture or motion on the surface 3. As an example, the user may, within a short timeframe, first apply two ticks onto the surface 3 at the selected position in the displayed e-mail message by any kind of pointing device to select this position 5 as the target for the shortcut 2 and then virtually draw a closed line from the selected position 5 to a drop region 6. Preferably, the drop region 6 will be displayed at a border of the surface 3. Fig. 1 illustrates a situation when the user has chosen to create a shortcut 2 pointing to the position 5 of a phone number in the signature region of a displayed e-mail message 4. By a first gesture or tactile action, the user has selected the phone number 5.

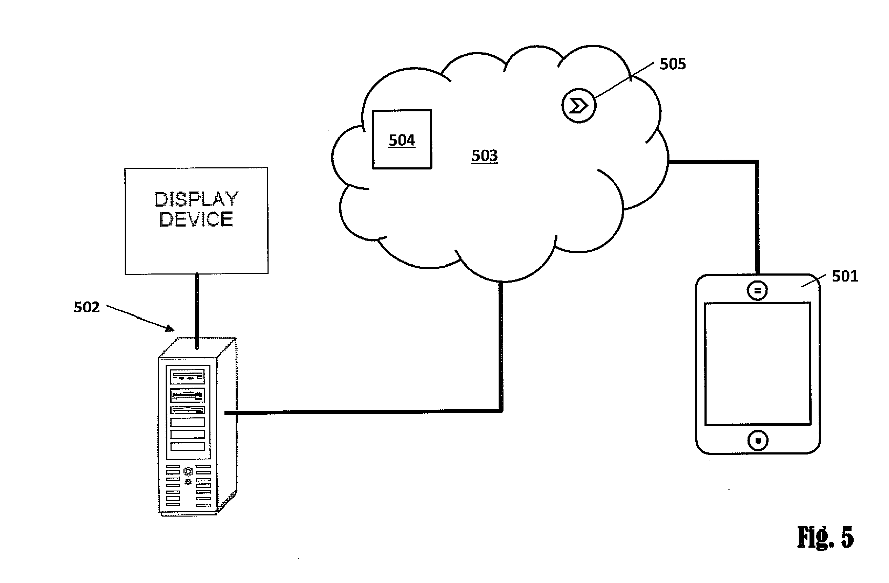

This tactile gesture may include tipping or wiping over the respective display region. Then the user has created the shortcut 2 by another tactile gesture as, for example, by virtually moving or sliding the highlighted selection 5 to the drop area 6. The user interaction will result in a shortcut 2 created by the surface 3 operating system of the smartphone 1. The shortcut 2 data may be stored in the local storage of the smartphone 1 or at a remote position as explained below wit reference to Fig. 5. In an embodiment, the shortcut may be displayed in the same way on a pane or layer of the surface as known from application icons. In another embodiment, the shortcut 2 may be displayed integrally with the drop area 6 as shown in Fig. 1. In an embodiment the drop area 6 may contain a number of shortcuts created recently by the user. In another embodiment, the drop region 6 and/or the shortcuts 2 may be displayed always on top of any other application or layer to enable easy and quick access by the user.

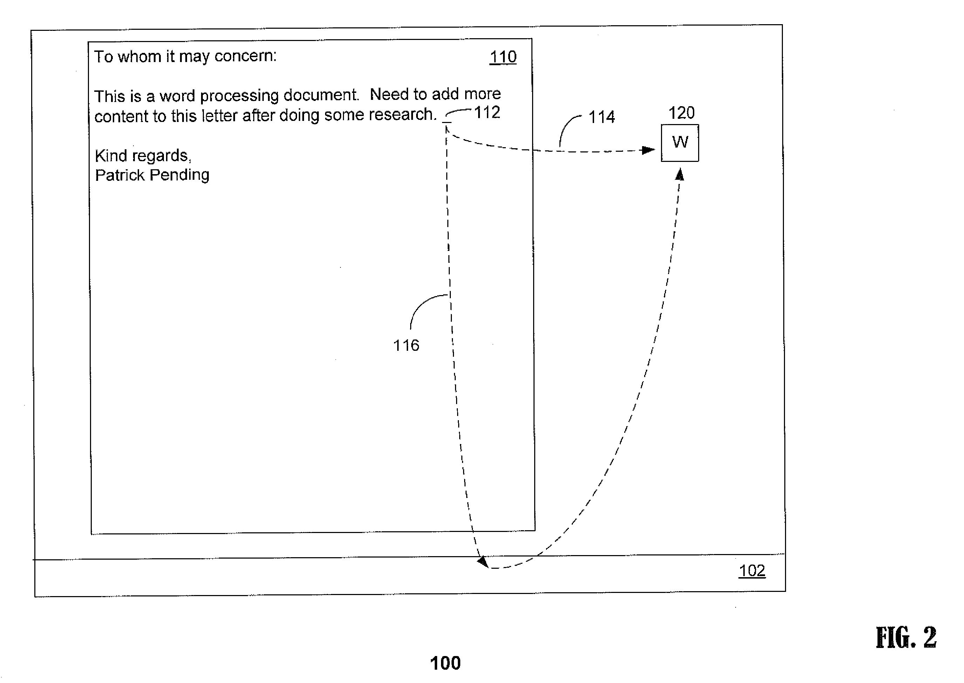

In an embodiment, activation of the shortcut 2 may start the application where the shortcut 2 was originally created from thereby causing this application to display the e-mail message 4 at the same position and with the same displaying properties as before. Such displaying or, more general, rendering properties may be the display orientation, display magnification, display illumination/contrast levels, scroll positions, screen size, screen resolution, sound level, playback position, playback speed and the like. In an embodiment, activation may be performed by a tactile gesture on the surface 3 as, for example, double tipping onto the displayed shortcut 2 icons. Fig. 2 illustrates the creation of a shortcut to a position in a file according to a second embodiment. As before, the shortcut 120 may be created via interactions with a graphical user interface (GUI) 100. In this embodiment, the GUI 100 may be a desktop environment (DE) of an operating system. A user may interact with files through the DE 100 by, for example, opening, viewing, editing, listening to, saving, and/or closing the contents of a file. In an exemplary embodiment, a user may open file 110 to view/modify the contents of the file 110. The file 110 may be a word processing file, for example, a Microsoft® Word file. The user may then create a shortcut 120 on the DE 100 to a particular position 112 in file 110. When the shortcut 120 is created it may be associated with the position 112 in file 110. This association may be persistent even after the file 110 is closed. In an embodiment, the created shortcut 120 may be displayed so that it is always on the foreground of the GUI 100. Specifically, the shortcut 120 will always be visible (also known as "always on top") even if other windows are dragged over the shortcut 120.

In an embodiment, activating the shortcut 120 may indicate to the user the position 112 in the file 110. For example, double clicking on the shortcut 120 via a computer mouse may activate the shortcut 120. In response to activating the shortcut 120, a blinking cursor (i.e., the indicator) may be displayed at position 112. In an embodiment, if the file 110 is not open prior to the activation of the shortcut 120, activation of the shortcut 120 may first open the file 110 and then the position 112 may be indicated to the user. In an embodiment, after activation of the shortcut 120, input entered by the user to edit the file may modify the file starting at the position 112 indicated to the user.

A person having ordinary skill in the art will appreciate that the blinking cursor 112 is an example of an indicator, and that in other embodiments any visual indicator may be utilized. This may include varying the highlighting, shading, and/or visual depth at position 112, displaying a marker such as an arrow over position 112, etc.

Various actions may be used to create the shortcut 120. In an embodiment, the user may point a mouse pointer at position 112, click a button on the mouse, drag the mouse pointer to a desired shortcut creation location on the DE 100 while still holding the mouse button and then release the button at the desired shortcut creation location (the dashed line 114 illustrates the motion of the mouse pointer). Sometimes, the DE 100 may be overlaid by one or more displayed windows, and therefore, a location on DE 100 may not be easily accessible when the user tries to create the shortcut 120. Thus, in another embodiment, the user may point the mouse pointer at position 112, click a button on the mouse, drag the mouse pointer to a location such as the toolbar 102 while holding down the mouse button, continue dragging the mouse pointer to the desired shortcut creation location on the DE 100 while still holding the mouse button and then release the button at the desired shortcut creation location (the dashed line 116 illustrates the path of the mouse pointer). The dragging of the mouse to the toolbar 102 first may signal to the computer system that the shortcut should be placed on the DE 100 and not on one of the windows overlaid on DE 100. In an embodiment, responsive to dragging of the mouse pointer to the toolbar 102 in the process of creating the shortcut 120, the windows overlaid on GUI 100 may become translucent or transparent so that the user can better view the GUI 100 when deciding where to place the shortcut 120. In an embodiment, the shortcut 120 may be created via menus such as a right-click menu. The user may, for example, point the mouse pointer at position 112, click a button on the mouse, drag the mouse pointer to a desired shortcut creation location on the DE 100 while still holding the mouse button and then release the button at the desired shortcut creation location. In response to this action by the user, a menu may be displayed to the user which includes an option to create a shortcut. Shortcuts may be created to positions in any type of file including word processing files, spreadsheet files (such as Microsoft® Excel files), presentation files (such as Microsoft® Powerpoint files), diagram files (such as Microsoft® Visio files), e-mail files, files accessible via web browsers, audio files, and video files.

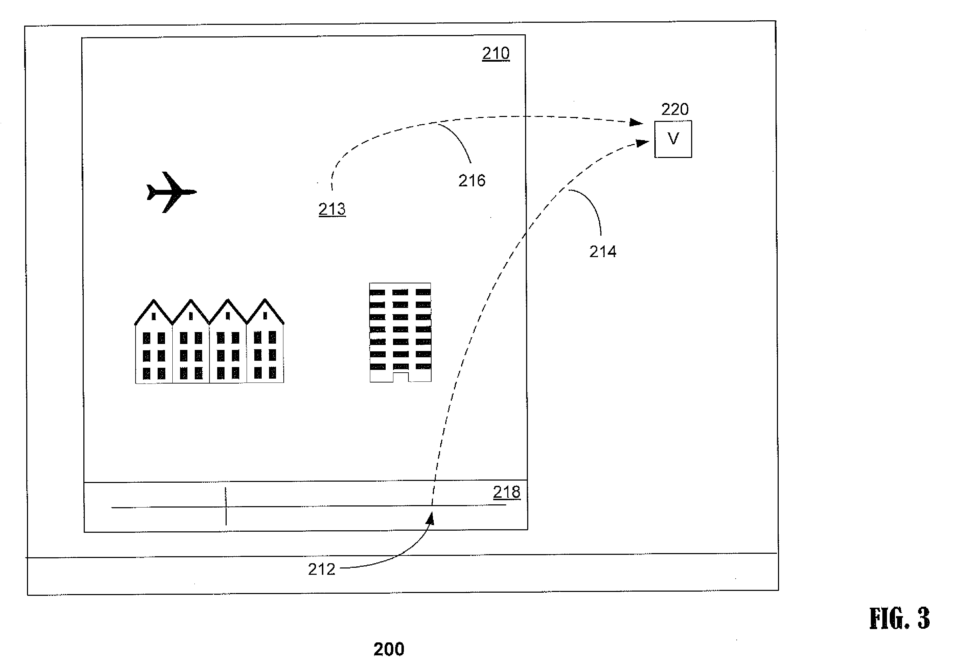

Fig. 3 illustrates the creation of a shortcut to a position in a video file according to an embodiment. A video file 210 may be opened in a video player presented on GUI 100. Using the principles discussed above, a shortcut 220 may be created to a position in the video by clicking on a position 212 in the video's timeline 218 and dragging the mouse pointer to a location on the GUI 100. The dashed line 214 illustrates the motion of the mouse pointer. Activating the shortcut 220 may play the video 210 starting from a video frame corresponding to the position 212 in the video's timeline. In another embodiment, clicking on any location 213 in the currently playing video frame and dragging the mouse pointer to a location on the GUI 100 may create a shortcut 220 to a position in the video file 210 corresponding to the currently playing video frame. The dashed line 216 illustrates the motion of the mouse pointer.

The granularity of a position corresponding to a shortcut such as 120 and 220 may be customizable. For example, in an embodiment, user preferences may be set to create shortcuts to word processing files at a paragraph level. Therefore, if a shortcut is created by clicking and dragging a position in the middle of a paragraph, activating the shortcut may place a blinking cursor (i.e., the indicator) at the beginning of the paragraph instead of at the middle of the paragraph. In another embodiment, user preferences may be set to create shortcuts to word processing files at a letter level. Therefore, if a shortcut is created by clicking and dragging a position corresponding to the third letter of a particular word in a paragraph, activating the shortcut may place a blinking cursor (i.e., the indicator) at exactly the third letter of that particular word.

In an embodiment, a description of the shortcut may be displayed adjacent to the shortcut. The description may be automatically generated upon creation of the shortcut or may be supplied manually by the user. An automatically generated description may include an indication of the name of the file associated with the shortcut and/or an indication of the position associated with the shortcut.

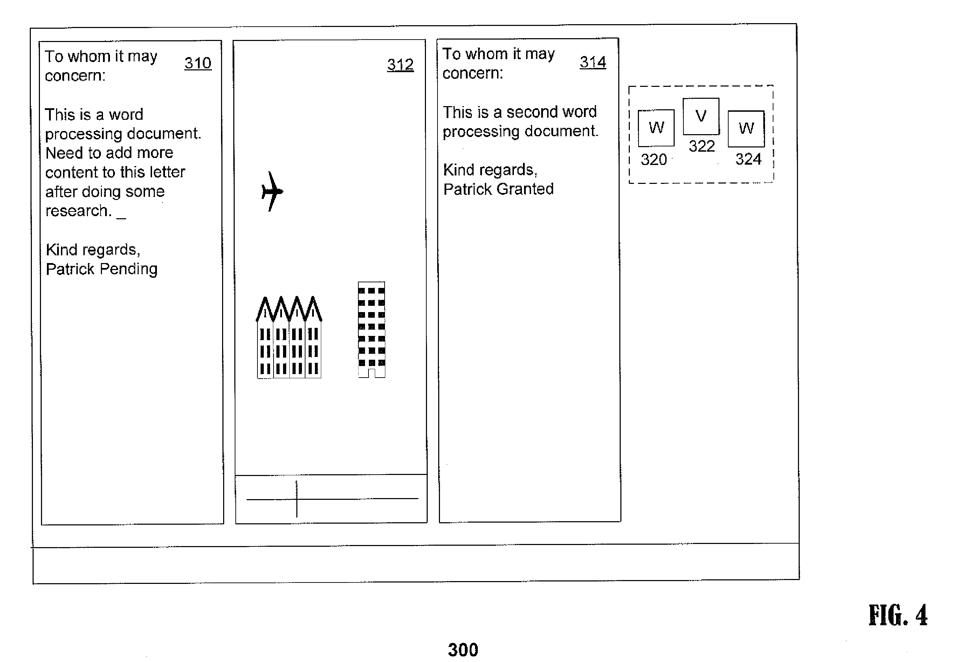

Fig. 4 illustrates the presentation of application windows based on the arrangement of shortcuts according to an embodiment. Often, a user may access multiple files by manually arranging the windows displaying the files such that all windows are viewable on the GUI at the same time. For example, as illustrated in FIG. 3, a user may arrange windows 310, 312, and 314 adjacent to each other on GUI 300 so that the user may access all three windows at the same time. In addition, the user may arrange the windows 310, 312, and 314 in a particular pattern based on the user's preference. However, when the user closes one or more of the windows 310, 312, and 314, and re-opens them, the user may have to re-arrange the windows again based on the user's preference. In an embodiment, the arrangement of windows 310, 312, and 314 may be based on the arrangement of the shortcuts associated with the files displayed in those windows. For example, shortcuts 320, 322, and 324 may be associated with the files displayed in windows 310, 312, and 314 respectively. In an embodiment, the user may arrange shortcuts 320, 322, and 324 in approximately the same arrangement which the user prefers the corresponding file windows. For example, the user may prefer window 310 to be placed on the left side of the GUI 300, window 312 to be placed in the middle of the GUI 300, and window 314 to be placed on the right side of the GUI 300. Therefore, the user may arrange the shortcuts 320, 322, and 324 in a similar manner, i.e., shortcut 320 may be placed on the left, shortcut 322 may be placed in the middle, and shortcut 324 may be placed on the right as illustrated in FIG. 3. In response to selecting and activating all three shortcuts 320, 322, and 324, the files associated with the shortcuts may be opened in windows 310, 312, and 314 (if the files are not already open), and the windows 310, 312, and 314 may be automatically arranged on GUI 300 to mirror the arrangement of shortcuts 320, 322, and 324 as shown in FIG. 3. In an embodiment, when the shortcuts are selected and activated, the corresponding windows' dimensions may be adjusted so that the windows occupy approximately equal areas on GUI 300. In an embodiment, the windows' dimensions may adjusted so that the entire display area available on GUI 300 is utilized by the windows.

The shortcuts may be selected and/or activated in response to various actions performed by a user. Actions to select multiple icons in a DE such as individually clicking on each icon while holding down a particular keyboard button (for example, the "ctrl" button), dragging a box around the icons using the mouse, etc., are known in the art, and any of these selecting actions may be utilized to select the shortcuts. Similarly, actions to activate multiple selected icons in a DE such as right-clicking on multiple selected icons to open a menu and selecting the "open" command from the menu are known in the art, and any of these activating actions may be utilized to activate the shortcuts. In an embodiment, the selection of multiple shortcuts may automatically activate the selected shortcuts without requiring additional actions for the activation.

A person having ordinary skill in the art will appreciate that the arrangement of shortcuts and windows shown in Fig. 3 is illustrative and many other arrangements are possible in other embodiments. In addition, each shortcut shown in Fig. 3 may be any type of shortcut as long as the activation of the shortcut results in the opening of a window in GUI 300. For example, in an embodiment, each shortcut may be associated with a file and a position in the file as explained in the discussions pertaining to Figs. 1 and 2. In another embodiment, the shortcut may be associated with just a file (without any position information). In a further embodiment, the shortcut may be associated with an application (without any information about files or positions within files) such as a shortcut which launches an application.

The principles discussed in this application are applicable to any device with a DE including desktop computers, laptop computers, tablet devices, mobile phones, smart phones, automobile computers with a graphical interface, video game devices, e-readers, and entertainment devices such as televisions and media players. In the foregoing discussion, although user actions for creating, selecting, and activating shortcuts have been described in the context of input devices such as a computer mouse and keyboard for clarity purposes, any other input device may be used to perform the same user actions depending on the device receiving the input. For example, if the user is interacting with a smart phone having a touchscreen, the user may create a shortcut by, for example, double tapping his/her finger on a particular position within a file, dragging the finger while maintaining contact with the touchscreen, and then removing the finger from the touchscreen when the desired location on the DE of the smart phone is reached. Analogous actions may be performed using input devices such as a stylus, trackball, pointing stick, remote control device, video game controller, motion sensors (for example, Microsoft®'s Kinect sensor), etc.

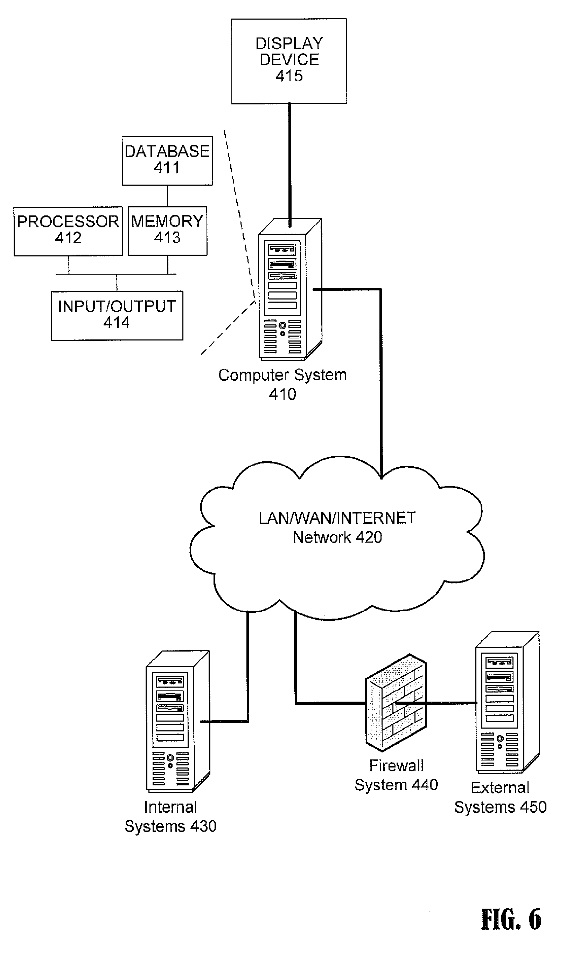

Fig. 5 shows an exemplary architecture in an embodiment of the invention. Multiple devices 501, 502 are provided to access a shared file or media item 504. The first device 501 is a mobile device, namely a smartphone. The second device 502 may be a typical desktop computer device as described below in detail with reference to Fig. 6. Access to the shared file or media item 504 is provided by means of a network infrastructure 503. In an embodiment the network infrastructure 503 may connect to the devices 501, 502 by wire or in a wireless manner. The network infrastructure 503 also provides access to data of the file or media item 504 shared between the devices 501, 502. The access to the data can be based on any known type of network data access service. In particular such data access service may be provided by a network file server, a webserver, an e-mail exchange server, a streaming host, a file sharing host, a database system, internet telephony and the like. The data access provided to the devices 501, 502 allows the respective users to share the same file or media items. Additionally, the network infrastructure 503 provides functionality to share shortcuts 505 created by one of the devices 501, 502. In an embodiment the user of the mobile device 501 may create a shortcut 505 for a specific displaying or rendering situation respective to the file or media item 504. Again, the shortcut may correspond to a specific position in an e-mail text. Creating the shortcut on the smartphone as described before with reference to Fig. 1 therefore will allow the smartphone user to get back to the displayed situation without scrolling to the signature region of the e-mail message as explained before.

In an embodiment, the architecture may additionally allow the smartphone user to push the shortcut from the smartphone to a shared and/or remote location 505. Then, by example, the user will be able to use the shortcut 505 when working at the desktop device 502 at a later time. In order to compensate for the differences in the display and rendering properties between the desktop device 502 and the smartphone 501 the shortcut may encode not only a reference suitable to the access to the file or media item 504 but also the visual properties of the displaying or rendering. As pointed out before, these visual properties may include the display orientation, display magnification, the scroll positions, the screen size, the screen resolution, the sound level, playback position and playback speed. When the user accesses the shortcut created on the smartphone 501 and shared at the location 505 from the desktop device 502, the desktop device operating system first determines the application to be started for performing the displaying or rendering as encoded in the shortcut 505. This application typically is selected according to the type of file or media item 504 the shortcut 505 refers to. Then the desktop device operation system starts the application and provides the shortcut 505 data as an input to this application. Then, the application itself determines the extent of data of the file or media item 504 required for displaying or rendering according to the rendering properties encoded in the shortcut 505. At the same time, the application may adjust the rendering to match with the rendering properties encoded in the shortcut 505 data. This may include adjusting the display resolution and/or the viewport, adjusting the loudness value and the like. Afterwards, the application may start loading the data of the file or media item 504 from the shared access location to the extent determined before. Such selective loading will result in less network resource usage than loading of the entire data would cause. This may be significant in situation where the bandwidth in the connections between the devices 501, 502 and the network infrastructure 503 is limited. Finally, the application displays the file or media item 504 on the desktop or surface. As a result, the user of the desktop device 502 will get a displaying or rendering of the file or media item very similar to the displaying or rendering on the smartphone where the shortcut was created. This will help users to share not only the access to a file or media item but also a visual and/or audible appearance in displaying or rendering of the file or media item.

FIG. 6 shows an exemplary architecture in another embodiment of the invention. The system running an application to view, create, or modify files 410 may be coupled to a display device 415, existing internal systems 430 through a network 420 and to external systems 450 through the network 420 and firewall system 440. The system running an application to view, create, or modify files 410 may include a desktop computer, laptop computer, tablet PC, client computer, mobile phone, central computer in a vehicle, any device with a touch screen, and any other computer. The display device 415 may include a computer monitor, a touch screen, a tablet PC screen, a mobile phone screen, and any other displays. The existing internal systems 430 may include a server and may provide file data and/or other data. The external systems 450 may include a server and may be maintained by a third party, such as an information service provider, and may contain file data and/or other data, that may be updated by the third party on a periodic basis. The system running an application to view, create, or modify files 410 may interact with these external systems to obtain files/updates through a firewall system 440 separating the internal systems from the external systems.

A person having ordinary skill in the art will appreciate that while internal systems 430 and external systems 450 are included in FIG. 6, in some embodiments, one or both of these systems may not be required. In an embodiment, the functionality provided by the internal systems 430 and external systems 450 may be provided by the system running the application to view, create, or modify files 410.

Each of the systems shown in Fig. 6 may contain a processing device 412, memory 413, a database 411, and an input/output interface 414, all of which may be interconnected via a system bus. In various embodiments, each of the systems 410, 430, 440, and 450 may have an architecture with modular hardware and/or software systems that include additional and/or different systems communicating through one or more networks. The modular design may enable a business to add, exchange, and upgrade systems, including using systems from different vendors in some embodiments. Because of the highly customized nature of these systems, different embodiments may have different types, quantities, and configurations of systems depending on the environment and organizational demands.

In an embodiment, memory 413 may contain different components for retrieving, presenting, changing, and saving data. Memory 413 may include a variety of memory devices, for example, Dynamic Random Access Memory (DRAM), Static RAM (SRAM), flash memory, cache memory, and other memory devices. Additionally, for example, memory 413 and processing device(s) 412 may be distributed across several different computers that collectively comprise a system.

Database 411 may include any type of data storage adapted to searching and retrieval. The database 411 may include SAP database (SAP DB), Informix, Oracle, DB2, Sybase, and other such database systems. The database 411 may include SAP's HANA (high performance analytic appliance) in-memory computing engine and other such in-memory databases.

Processing device 412 may perform computation and control functions of a system and comprises a suitable central processing unit (CPU). Processing device 412 may comprise a single integrated circuit, such as a microprocessing device, or may comprise any suitable number of integrated circuit devices and/or circuit boards working in cooperation to accomplish the functions of a processing device. Processing device 412 may execute computer programs, such as object-oriented computer programs, within memory 413.

The foregoing description has been presented for purposes of illustration and description. It is not exhaustive and does not limit embodiments of the invention to the precise forms disclosed. Modifications and variations are possible in light of the above teachings or may be acquired from the practicing embodiments consistent with the invention. For example, some of the described embodiments may include software and hardware, but some systems and methods consistent with the present invention may be implemented in software or hardware alone. Additionally, although aspects of the present invention are described as being stored in memory, this may include other computer readable media, such as secondary storage devices, for example, solid state drives, or DVD ROM; the Internet or other propagation medium; or other forms of RAM or ROM.

## Claims

1. A computer-implemented method for sharing rendering properties when accessing shared files or media items (504) on remote locations subsequently or alternatingly by a multiple of mobile and/or desktop devices (1; 501, 502), the method comprising steps for:
in response to an identification of a position (5) in a shared file or media item (4; 504) which is rendered or displayed on a first device (1; 501, 502), creating a shortcut (2; 505) by means of a surface (3) or desktop environment on said first device (1; 501), whereby said shortcut (2; 505) encodes a reference to the shared file or media item (4; 504) together with the rendering properties of and/or the identified position in the rendered or displayed file or media item;
sharing the shortcut across the multiple of device; and
in response to an activation of the shortcut on a second device, accessing the data of the file or media item referenced by the shortcut through said second device to an extent required for rendering or displaying the file or media item according to the rendering properties encoded in the shortcut.

2. A method according to claim 1, wherein the file is accessed at a position seeked in accordance to the location of the data necessary for rendering or displaying the file according to the rendering properties encoded in the shortcut.

3. A method according to claim 1 or 2, wherein the rendering properties encoded with/in the shortcut include one or more selected from a group containing: application used for rendering, display orientation, display magnification, scroll positions, screen size, screen resolution, sound level and playback position.

4. A method according to any preceding claim, wherein the shortcut is shared on the same remote location where the shared file or media item resides, which the shortcut refers to.

5. A method according to any preceding claim, wherein the remote location is within a network infrastructure (503) providing services of a cloud or similar type of file hosting site.

6. A method according to any preceding claim, wherein the shared media item is of the stream type and the access to the media item starts the stream at the playback position encoded in the shortcut.

7. A computer-implemented method comprising steps for:
in response to an identification of a displayed position (5; 112; 212) in a file or media item (4; 110; 210), creating, on a surface or desktop environment (3; 100; 200), a shortcut (2; 120; 220) to the identified position in the file or media item; and
in response to an activation of the shortcut, indicating the identified position in the file or media item.

8. The A method according to claim 7, further comprising steps for opening the file or accessing the media item (4; 110; 210) in response to the activation of the shortcut (2; 120; 220).

9. A method according to claim 7 or 8, wherein the identification of the position (112; 212) in the file or media item (4; 110; 210) includes:
dragging a cursor from the position in the file or media to a location on the surface or desktop (3; 100; 200) environment.

10. A method according to claim 7, 8 or 9, wherein the identification of the position (5; 112; 212) in the file or media item (4; 110; 210) includes:
dragging a cursor from the position in the file or media to a toolbar (6; 102), and
dragging the cursor from the toolbar to a location on the surface or desktop environment (3; 100; 200).

11. A computer-implemented method comprising:
in response to selection and activation of a plurality of shortcuts (320, 322,324):
determining an arrangement of a plurality of application windows (310, 312, 314) associated with the plurality of the shortcuts (320, 322, 324), wherein the determined arrangement mirrors an arrangement of the plurality of shortcuts (320, 322, 324), and
displaying, on a desktop or surface environment (300), the plurality of application windows (310, 312, 314) based on the determined arrangement.

12. A method according to claim 11, wherein the determined arrangement utilizes a maximum available display space on the desktop or surface (300) environment.

13. A method according to claim 12, wherein the determined arrangement depends on the viewport of the desktop or surface environment (300) and includes steps for processing of shortcut (320 322, 324) data encoding displaying or rendering properties to adapt the arrangement to the viewport.

14. A non-transitory computer-readable medium embodied with computer-executable instructions for causing a computer to execute instructions for performing a method according to any preceding claim.

15. An apparatus (410) comprising:
a processor (412) to:
in response to an identification of a displayed position in a file, create, on a desktop environment, a shortcut to the identified position in the file; and
in response to an activation of the shortcut, indicate the identified position in the file.

16. An apparatus (410) comprising:
a processor (412) to:
in response to selection and activation of a plurality of shortcuts, determine an arrangement of a plurality of application windows associated with the plurality of the shortcuts, wherein the determined arrangement mirrors an arrangement of the plurality of shortcuts; and
a display to:
display, on a desktop environment, the plurality of application windows based on the determined arrangement.

## Amended claims

### Amended claims in accordance with Rule 137(2) EPC.

**1.** A computer-implemented method for sharing rendering properties when accessing shared files or media items (504) on remote locations subsequently or alternatingly by a multiple of mobile and/or desktop devices (1; 501, 502), the method comprising steps for:
in response to an identification of a position (5) in a shared file or media item (4; 504) which is rendered or displayed on a first device (1; 501, 502), creating a shortcut (2; 505) by means of a surface (3) or desktop environment on said first device (1; 501), whereby said shortcut (2; 505) encodes a reference to the shared file or media item (4; 504) together with the rendering properties of and/or the identified position in the rendered or displayed shared file or media item (4; 504);
sharing the shortcut (2; 505) across the multiple of devices (1; 501, 502);
and
in response to an activation of the shortcut (2; 505) on a second device (502), accessing the data of the shared file or media item (4; 504) referenced by the shortcut (2; 505) through said second device to an extent required for rendering or displaying the shared file or media item (4; 504) according to the rendering properties encoded in the shortcut (2; 505).

**2.** A method according to claim 1, wherein the file (4; 504) is accessed at a position seeked in accordance to the location of the data necessary for rendering or displaying the file (4; 504) according to the rendering properties encoded in the shortcut (2; 505).

**3.** A method according to claim 1 or 2, wherein the rendering properties encoded with/in the shortcut (2; 505) include one or more selected from a group containing: application used for rendering, display orientation, display magnification, scroll positions, screen size, screen resolution, sound level and playback position.

**4.** A method according to any preceding claim, wherein the shortcut (2; 505) is shared on the same remote location where the shared file or media item (4; 504) resides, which the shortcut (2; 505) refers to.

**5.** A method according to any preceding claim, wherein the remote location is within a network infrastructure (503) providing services of a cloud or similar type of file hosting site.

**6.** A method according to any preceding claim, wherein the shared media item (4; 504) is of the stream type and the access to the media item starts the stream at the playback position encoded in the shortcut (2; 505).
